# EUROPEAN PATENT SPECIFICATION

(11) **EP 4 225 596 B1**
(45) Date of publication and mention of the grant of the patent: **21.08.2024**
(21) Application number: 21798775.9
(22) Date of filing: 06.10.2021
(51) Int. Cl.: B60G 7/04, B60G 15/06, F16F 9/58, B60G 17/027

(54) **DEVICE FOR ADJUSTING THE ATTITUDE OF A MOTOR VEHICLE, AND AUTOMOTIVE SHOCK ABSORBER PROVIDED WITH SUCH DEVICE**
VORRICHTUNG ZUR EINSTELLUNG DER TRIMMLAGE EINES KRAFTFAHRZEUGS UND KRAFTFAHRZEUGSTOSSDÄMPFER MIT EINER SOLCHEN VORRICHTUNG
DISPOSITIF DE RÉGLAGE DE L'ATTITUDE D'UN VÉHICULE AUTOMOBILE, ET AMORTISSEUR AUTOMOBILE ÉQUIPÉ D'UN TEL DISPOSITIF

(30) Priority: 07.10.2020 IT 202000023614
(43) Date of publication of application: 16.08.2023
(73) Proprietor: Marelli Suspension Systems Italy S.p.A., 20011 Corbetta (MI) (IT)
(72) Inventor: SEMINARA, Massimo, 14100 Asti (IT); PICCINNO, Andrea, 10134 Torino (IT); CURCURUTO, Gabriele, 10135 Torino (IT); PAGANO, Giuseppe, 10142 Torino (IT); ARRIGONI, Andrea, 20081 Abbiategrasso (Milano) (IT)
(74) Representative: Savoca, Agatino
(86) International application number: PCT/IB2021/059157
(87) International publication number: WO 2022/074578

(56) References cited:
- EP-A1- 2 476 930
- DE-A1- 102004 019 991
- DE-A1- 102011 053 854
- JP-A- 2008 044 571
- JP-U- S6 227 809
- JP-U- S6 448 307
- KR-A- 20040 006 903
- US-A1- 2007 200 311
- US-A1- 2008 179 148

## Description

### Technical field

This invention is generally in the field of automotive components; in particular, the invention relates to an automotive shock absorber having an attitude adjustment device.

### Background art:

While document JP S62 27809 U discloses a device according to the preamble of claim 1, documents US 2007/200311 A1, DE 10 2004 019991 A1, EP 2 476 930 A1, KR 2004 0006903 A, DE 10 2011 053854 A1, JP S64 48307 U, JP 2008 044571 A and US 2008/179148 A1 describe further devices of the state of the art.

### Summary of invention

Systems for adjusting the attitude of a motor vehicle are known, comprising an actuator capable of varying the vertical travel of the vehicle's shock absorber.

An object of this invention is to provide a device which allows, on the one hand, to adjust the distance between the spring plate (connected to the unsprung mass, for example to a structure integral with the wheel hub, or to the cylindrical tube of an automotive shock absorber) and the sprung mass of the vehicle (so as to vary the height of the sprung mass above the ground under static conditions); and on the other hand, to adjust the distance between a resilient bumper and the unsprung mass of the vehicle, so as to reduce or increase the vertical travel of the sprung mass with respect to the unsprung mass (for example, by forming a limit stop for the cylindrical tube of the shock absorber in the compression phase of the shock absorber).

A further object of this invention is to provide a device for the adjustment of the attitude of a vehicle and coordinated adjustment of the bumper clearance, which at the same time has a simplified architecture and a smaller size (particularly in the radial sense).

In order to achieve this result, an attitude adjustment device for a motor vehicle according to the invention comprises a cylindrical body which defines a chamber in which two actuators are slidably housed in the form of a cylinder within which a piston slides, said cylinder being connected to a bumper (adapted to form a limit stop in compression of the sprung mass of the vehicle with respect to the unsprung mass), and said piston being connectable to the sprung mass of the vehicle.

The actuators are configured to be driven in axial movement by the inlet of a pressurized fluid into the chamber that houses them.

Having fixed a horizontal reference plane, passing through a radial flange adapted to form an upper abutment of a main spring of the vehicle suspension, the pressure of the fluid simultaneously raises, with respect to said reference plane, both the first actuator (moving the bumper away from the unsprung mass or cylindrical tube of the shock absorber, and thus increasing the compression stroke thereof) and the second actuator (increasing the distance of the cylindrical body of the device from the connection point with the sprung mass of the vehicle, and thus the distance from the ground of said sprung mass). With this configuration, an optimal attitude for normal road conditions is obtained.

Conversely, by removing the fluid from the chamber, the two actuators are lowered with respect to the reference plane, shortening both the compression stroke of the shock absorber and the ground clearance of the sprung mass. With this configuration, the setup is optimized for higher performance conditions (for example, for using the vehicle on a track).

With an adjustment device according to this invention, it therefore becomes possible to adapt the configuration of the suspension of a vehicle to different road conditions, prioritizing from time to time the handling of the vehicle or the driving comfort, by means of a single device with a compact layout.

The aforementioned and other objects and advantages are achieved, according to one aspect of the invention, by a device for adjusting the attitude of a motor vehicle and the coordinated adjustment of the bumper clearance, and an automotive shock absorber equipped with such a device, having the features defined in the appended claims.

### Brief description of the drawings

Functional and structural features of some preferred embodiments of a device for adjusting the attitude of a motor vehicle to adjust the bumper clearance in a coordinated way and an automotive shock absorber equipped with said device according to the invention will now be described.

Reference is made to the appended drawings, wherein:
- Fig. 1 and 2 are longitudinal sectional views of a device adapted to adjust the attitude of a motor vehicle and to adjust the bumper clearance in a coordinated way shown in two operating configurations, respectively a first attitude, optimized for normal road use, and a second attitude, optimized for track use, according to one embodiment of the invention;
- Fig. 3 is a longitudinal sectional view of a shock absorber incorporating the adjustment device in the configuration of Fig. 1, according to an embodiment of the invention; and
- Fig. 4 is a longitudinal sectional view of the shock absorber of Fig. 3, with the device shown in the configuration in Fig. 2.

### Detailed description

Before describing a plurality of embodiments of the invention in detail, it should be clarified that the invention is not limited in its application to the construction details and configuration of the components presented in the following description or illustrated in the drawings.

The invention may assume other embodiments and be implemented or constructed in practice in different ways. It should also be understood that the phraseology and terminology have a descriptive purpose and should not be construed as limiting.

Referring by way of example to the figures, a device 9 for adjusting the attitude of a motor vehicle comprises a cylindrical body 10, which includes a radially projecting first flange 12, said flange 12 being adapted to form an upper bearing of a main spring of an automotive suspension (e.g., the spring of a shock absorber).

The cylindrical body 10 defines a first, axially lower chamber 14a and a second, axially upper chamber 14b (with respect to the orientation that the device 9 assumes under conditions of use), said second chamber 14b being hermetically sealed above by a lid 16 and is configured to be placed in fluid connection with the exterior of the cylindrical body 10 via a through hole 18 in the cylindrical body 10.

The first and second chambers 14a, 14b are fluidically decoupled by a septum 20, axially interposed between said first and second chamber 14a, 14b.

A bumper 22 is also provided, which is slidably received in the first chamber 14a of the cylindrical body 10 and is adapted to form a limit stop for the oscillation of the sprung mass of the vehicle when the latter approaches the unsprung mass of the vehicle.

The device 9 further comprises a primary actuator 24, which in turn includes a primary cylinder 26, slidably housed in the second chamber 14b of the cylindrical body 10, said primary cylinder 26 being axially movable from a first position (proximal to the septum 20), to a second position (proximal to the lid 16), in response to the inlet or withdrawal of fluid into/from the second chamber 14b.

The primary cylinder 26 defines within itself a third chamber 27, in fluid connection with said second chamber 14b. The primary actuator 24 further comprises a primary rod 28, passing axially through the septum 20 and connected at its opposite ends to the primary cylinder 26 and the bumper 22, respectively.

The primary rod 28 is adapted to cause the bumper 22 to slide in the first chamber 14a in the same direction as the sliding of the primary cylinder 26 in the second chamber 14b.

The device 9 further comprises a secondary actuator 30, which includes an auxiliary piston 32 slidably received in the third chamber 27 of the primary cylinder 26, said auxiliary piston 32 being configured to move axially with respect to the primary cylinder 26 in response to the inlet or withdrawal of fluid into/from the third chamber 27.

The secondary actuator 30 also comprises a secondary rod 34, axially passing through the lid 16 and connected at a first end to the auxiliary piston 32, the opposite end of the secondary rod 34 being adapted to be connected to the sprung mass of the motor vehicle.

Due to this configuration, the inlet of a pressurized fluid into the second chamber 14b causes the axial sliding of the primary cylinder 26 from the position proximal to the septum 20 to the position proximal to the lid 16 and the simultaneous withdrawal of the bumper 22 toward the septum 20 (whereby, when the device 9 Is mounted to the vehicle, the clearance between the bumper 22 and the unsprung mass of the vehicle increases).

At the same time, the fluid entering the third chamber 27 causes the auxiliary piston 32 to slide within the primary cylinder 26, moving the cylindrical body 10 away from the connection point of the secondary rod 34 and increasing the height from the ground of the sprung mass of the vehicle.

According to a preferred embodiment, the cylindrical body 10 comprises a radially projecting shoulder 15 within the second chamber 14b. According to this embodiment, a side wall 26a of the primary cylinder 26 comprises a radially projecting portion adapted to abut against said shoulder 15 when the primary cylinder 26 is in a position proximal to the septum 20, whereby contact between said septum and said primary cylinder 26 is at least partially avoided.

Expediently, the lid 16 may have a first portion against which the primary cylinder 26 abuts when said primary cylinder is in an axially upper end-of-travel position, and a second portion, axially more protruding within the second chamber 14b with respect to said first portion, against which second portion the auxiliary piston 32 abuts when said auxiliary piston is in an axially upper end-of-travel position. In this way, it is possible to geometrically disjoin the axial strokes of the primary cylinder 26 and the auxiliary piston 32, as the latter would abut against the lid 16 before the primary cylinder 26. According to an alternative not shown, it is also possible for the lid 16 to be configured in the opposite manner, i.e., whereby the primary cylinder 26 abuts against the lid 16 before the auxiliary piston 32 (e.g., by providing for a central portion of the lid 16, corresponding to the projection of the auxiliary piston 32, to protrude outwardly from said lid 16).

According to a preferred embodiment, the primary cylinder 26 comprises a base 26b, which faces the septum 20 and in which there is at least one through hole 26c, adapted to place the second chamber 14b and the third chamber 27 in fluid connection.

Expediently, the primary cylinder 26 comprises a relief 26d, radially projecting within the third chamber 27, said relief 26d being adapted to form a limit stop of the auxiliary piston 32 in the sliding of said piston within the primary cylinder 26. In this configuration, the auxiliary piston 32 will therefore be slidable, with respect to the primary cylinder 26, from a first position, proximal to the base 26b of the primary cylinder 26, to a second position, proximal to the relief 26d (against which it may abut).

According to one embodiment (not shown), the device 9 is configured to form the upper abutment of a spring interposed between the sprung mass and the unsprung mass of a vehicle, in the absence of damping devices coaxial to the spring. In this case, the spring will be able to rest below on a structure integral with the wheel hub, and the device 9 will be connected to a frame associated with the sprung mass of the vehicle.

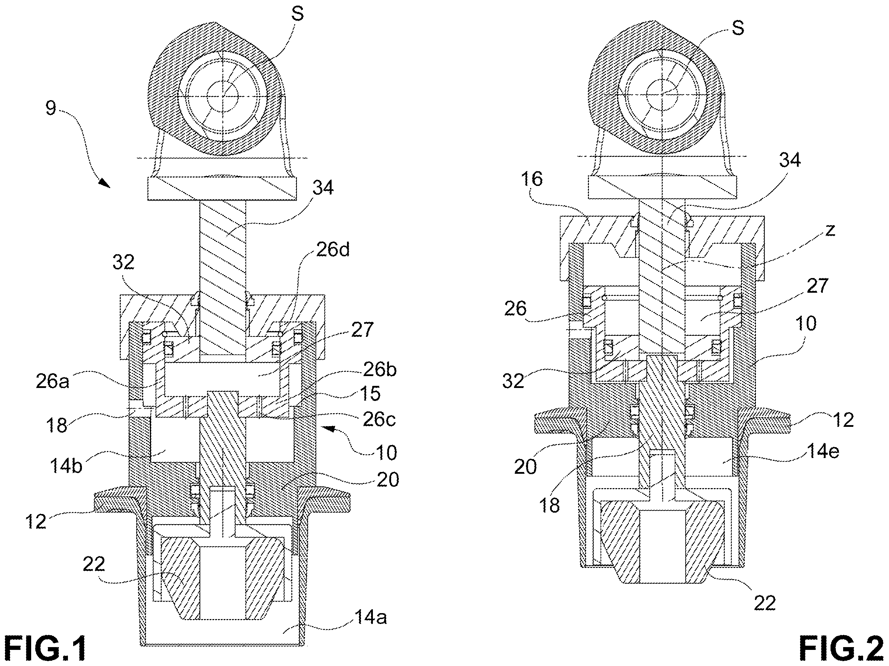

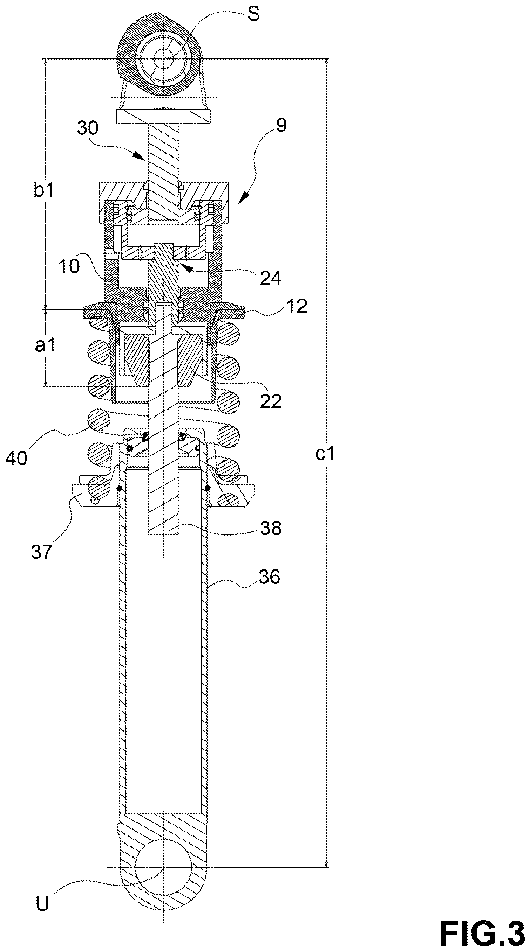

According to an alternative embodiment, shown by way of example in Fig. 2 and 3, the device 9 is incorporated into a conventional automotive shock absorber.

Said shock absorber comprises a device 9 for adjusting the attitude of a motor vehicle, according to any of the embodiments described above, said device 9 being connectable to a sprung mass of the motor vehicle via the secondary rod 34.

The shock absorber further comprises a cylindrical tube 36, adapted to be connected to the unsprung mass of the motor vehicle, in the cylindrical tube 36 of which a shock absorber piston is slidable, adapted to interact with a fluid contained within said cylindrical tube 36 to dampen the vertical oscillatory motion of said sprung mass, and a shock absorber stem 38, slidingly received by said cylindrical tube 36 and movable integral with said shock absorber piston, said shock absorber stem 38 having an end projecting above from said cylindrical tube 36, the end of which is integral with the buffer 22.

A spring 40 is also provided, having one end that engages the first flange 12 of the cylindrical body 10, and the opposite end that engages a second flange 37 radially projecting from the cylindrical tube 36, said second flange 37 being movable integrally with said cylindrical tube 36.

In this configuration, it is possible on the one hand to adjust the overall length of the shock absorber (by moving the cylindrical body 10 closer to or away from the constraint point of the secondary rod 34 by operating the primary actuator 30 and by increasing or decreasing the height of the vehicle from the ground), and on the other hand to adjust the distance of the bumper, i.e., the distance of the bumper 22 from the cylindrical tube 36, so as to decrease or increase the maximum travel of the tube with respect to the bumper during compression of the shock absorber. This last feature allows in particular for the behavior of the suspension to be made stiffer as needed, reducing the maximum oscillation in the compression phase (in the case of the shock absorber, limiting the vertical excursion).

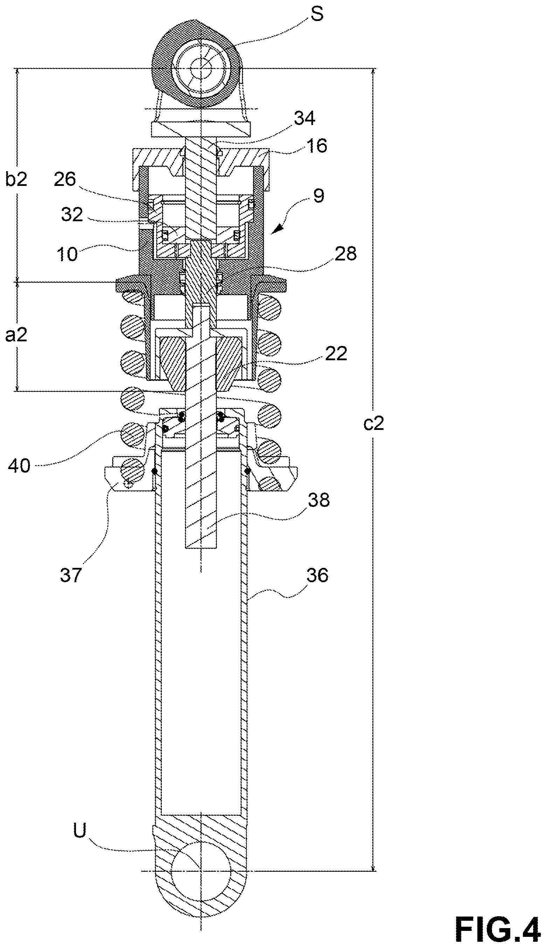

As a brief illustration of the operating principle of the device, an example of adjustment is described below, referring in particular to the embodiment shown in Fig. 3 and 4. It is intended, however, that the following may easily be applied, with the necessary modifications, even in the case wherein no shock absorber coaxial to the main spring of the suspension is provided, said spring being connected to an element rigidly attached to a wheel hub.

More specifically, Fig. 3 shows an initial configuration of the device, illustrated in an initial setup, wherein driving comfort is prioritized. In said configuration, the two actuators 24, 30 are in their respective absolute upper end-of-travel positions (i.e., they both abut against the lid 16).

In this way, the bumper 22 is maximally retracted toward the septum 20, and the cylindrical body 10 is maximally spaced from a connection point S of the device 9 with the sprung mass of the vehicle. That is, fixed in a horizontal reference plane passing through the radial flange 12, the axial end of the bumper 22 (facing the unsprung mass) will be at a distance a₁ from said reference plane, the connection point S will be at a distance b₁ from said reference plane, and the overall length of the shock absorber will be c₁ (measured from the connection point S of the shock absorber to the sprung mass of the vehicle to a connection point U of the shock absorber to the unsprung mass).

Fig. 4, on the other hand, shows a second configuration of the device, illustrated in a second attitude, wherein vehicle handling and responsiveness is prioritized. In such a configuration, the two actuators 24, 30 are in their respective absolute lower end-of-travel positions (i.e., the primary cylinder 26 is in the position proximal to the septum 20, and the auxiliary piston 32 is in the position proximal to the base 26b of the primary cylinder 26).

In this way, the bumper 22 is maximally extended axially with respect to the septum 20, and the cylindrical body 10 is maximally close to the connection point S of the device 9 with the sprung mass of the vehicle. That is, with respect to said horizontal reference plane passing through the radial flange 12, the axial end of the bumper 22 (facing the unsprung mass) will in this configuration be at a distance a₂>a₁ from said reference plane, the connection point S to the sprung mass will be at a distance b₂<b₁ from said reference plane, and the overall length of the shock absorber will be c₂<c₁ (measured from the connection point S of the shock absorber to the sprung mass of the vehicle to the connection point U of the shock absorber to the unsprung mass).

Further, throughout this description and in the claims, terms and expressions indicating positions and orientations, such as "longitudinal," "transverse," "vertical" or "horizontal," are to refer to the longitudinal axis z of the cylindrical body 10.

Various aspects and embodiments of a device for the adjustment of the attitude of a motor vehicle and the coordinated adjustment of the bumper clearance according to the invention have been described. It is understood that each embodiment may be combined with any other embodiment.

Furthermore, the invention is not limited to the described embodiments, but may be varied within the scope defined by the appended claims.

## Claims

1. A device (9) for the adjustment of the attitude of a motor vehicle and coordinated adjustment of the bumper clearance, the device comprising:
- a cylindrical body (10), which includes a first radially projecting flange (12), the flange (12) being adapted to form an upper abutment of a main spring of an automotive suspension, the cylindrical body (10) defining a first chamber (14a), axially lower, and a second chamber (14b), axially upper, the second chamber (14b) is hermetically sealed above by a lid (16) and is configured to be placed in fluid connection with the outside of the cylindrical body (10) by means of a through hole (18) in the cylindrical body (10), the first and second chambers (14a, 14b) being fluidically decoupled by a septum (20), axially interposed between the first and second chambers (14a, 14b);
- a bumper (22), slidably received in the first chamber (14a) of the cylindrical body (10) and adapted to form a limit stop for the oscillation of the sprung mass of the vehicle when the latter approaches the unsprung mass of the vehicle; **characterised in that** the device comprises
- a primary actuator (24), comprising:
- a primary cylinder (26), slidably received in the second chamber (14b) of the cylindrical body (10), the primary cylinder (26) being axially movable in response to the inlet or withdrawal of fluid into/from the second chamber (14b), and identifies at the inside thereof a third chamber (27), in fluid connection with the second chamber (14b); and
- a primary rod (28), axially passing through the septum (20) and connected at its opposite ends respectively to the primary cylinder (26) and to the bumper (22), the primary rod (28) being adapted to cause the bumper (22) to slide in the first chamber (14a) in the same direction as the sliding of the primary cylinder (26) in the second chamber (14b);
the device (9) further comprising a secondary actuator (30), which includes:
- an auxiliary piston (32), slidably received in the third chamber (27) of the primary cylinder (26), the auxiliary piston (32) being configured to move axially with respect to the primary cylinder (26) in response to the inlet or withdrawal of fluid into/from the third chamber (27); and
- a secondary rod (34), axially passing through the lid (16) and connected at a first end to the auxiliary piston (32), the opposite end of the secondary rod (34) being adapted to be connected to the sprung mass of the motor vehicle.

2. A device according to claim 1, wherein the cylindrical body (10) comprises a shoulder (15) projecting radially inside the second chamber (14b), and wherein a side wall (26a) of the primary cylinder (26) comprises a radially protruding portion adapted to abut against the shoulder (15) when the primary cylinder (26) is in a position proximal to the septum (20), in such a way that a contact between the septum and the primary cylinder (26) is avoided.

3. A device according to claim 1 or 2, wherein the lid (16) has a first portion against which the primary cylinder (26) abuts when the cylinder is in an axially upper end-of-travel position, and a second portion, axially more protruding inside the second chamber (14b) with respect to the first portion, against the second portion of which the auxiliary piston (32) abuts when the piston is in an axially upper end-of-travel position.

4. A device according to any one of the preceding claims, wherein the primary cylinder (26) comprises a base (26b), which faces the septum (20) and in which there is at least one through hole (26c), adapted to connect the second chamber (14b) and the third chamber (27) in fluid connection.

5. A device according to any one of the preceding claims, wherein the primary cylinder (26) comprises a relief (26d), protruding radially inside the third chamber (27), the relief (26d) being adapted to form a limit stop of the auxiliary piston (32) in the sliding of the piston inside the primary cylinder (26).

6. An automotive shock absorber, comprising:
- a device (9) for the adjustment of the attitude of a motor vehicle and coordinated adjustment of the bumper clearance, according to any one of the preceding claims, connectable to a sprung mass of the motor vehicle by means of the secondary rod (34);
- a cylindrical tube (36), adapted to be connected to the unsprung mass of the motor vehicle, in which cylindrical tube (36) a shock absorber piston is slidable and adapted to interact with a fluid contained inside the cylindrical tube (36) to dampen the vertical oscillatory motion of the sprung mass, the bumper (22) being adapted to form an upper abutment of the vertical stroke of the cylindrical tube during the compression phase of the automotive shock absorber;
- a shock absorber stem (38), slidably received by the cylindrical tube (36) and movable integrally with the shock absorber piston, the shock absorber stem (38) having an end protruding above from the cylindrical tube (36), the end being integral with the bumper (22); and
- a spring (40), having one end which engages the first flange (12) of the cylindrical body (10), and the opposite end which engages a second flange (37) projecting radially from the cylindrical tube (36), the second flange (37) being movable integrally with the cylindrical tube (36).

## Patentansprüche

1. Vorrichtung (9) zur Einstellung der Lage eines Kraftfahrzeugs und zur koordinierten Einstellung des Freiraums eines Puffers, wobei die Vorrichtung umfasst:
- einen zylindrischen Körper (10), der einen ersten radial vorstehenden Flansch (12) aufweist, wobei der Flansch (12) ausgebildet ist, einen oberen Anschlag einer Hauptfeder einer Kraftfahrzeugaufhängung zu bilden, wobei der zylindrische Körper (10) eine erste, axial untere Kammer (14a) und eine zweite, axial obere Kammer (14b) definiert, die zweite Kammer (14b) oben durch einen Deckel (16) hermetisch verschlossen und ausgebildet ist, mittels eines Durchgangslochs (18) in dem zylindrischen Körper (10) in Fluidverbindung mit der Außenseite des zylindrischen Körpers (10) gebracht zu werden, wobei die erste und die zweite Kammer (14a, 14b) durch eine Trennwand (20), die axial zwischen der ersten und der zweiten Kammer (14a, 14b) angeordnet ist, fluidtechniisch entkoppelt sind;
- einen Puffer (22), der gleitend in der ersten Kammer (14a) des zylindrischen Körpers (10) aufgenommen und ausgebildet ist, einen Wegbegrenzer für die Schwingung der gefederten Masse des Fahrzeugs zu bilden, wenn sich diese der ungefederten Masse des Fahrzeugs nähert;
**dadurch gekennzeichnet, dass** die Vorrichtung ein primäres Stellglied (24) aufweist, umfassend:
- einen Primärzylinder (26), der in der zweiten Kammer (14b) des zylindrischen Körpers (10) gleitend aufgenommen ist, wobei der Primärzylinder (26) als Reaktion auf den Einlass oder die Entnahme von Fluid in die/aus der zweiten Kammer (14b) axial beweglich ist und an seiner Innenseite eine dritte Kammer (27) ausweist, die in Fluidverbindung mit der zweiten Kammer (14b) steht; und
- eine Primärstange (28), die axial durch die Trennwand (20) hindurchgeht und an ihren gegenüberliegenden Enden mit dem primären Zylinder (26) bzw. mit dem Puffer (22) verbunden ist, wobei die primäre Stange (28) ausgebildet ist, den Puffer (22) in der ersten Kammer (14a) in der gleichen Richtung wie das Gleiten des primären Zylinders (26) in der zweiten Kammer (14b) gleiten zu lassen;
- die Vorrichtung (9) ferner ein sekundäres Betätigungselement (30) aufweist, umfassend:
- einen Hilfskolben (32), der in der dritten Kammer (27) des Hauptzylinders (26) gleitend aufgenommen ist, wobei der Hilfskolben (32) ausgebildet ist, sich als Reaktion auf den Einlass oder die Entnahme von Fluid in die/aus der dritten Kammer (27) axial in Bezug auf den Hauptzylinder (26) zu bewegen; und
- eine Sekundärstange (34), die axial durch den Deckel (16) verläuft und an einem ersten Ende mit dem Hilfskolben (32) verbunden ist, wobei das gegenüberliegende Ende der Sekundärstange (34) ausgebildet ist, mit der gefederten Masse des Kraftfahrzeugs verbunden zu werden.

2. Vorrichtung nach Anspruch 1, wobei der zylindrische Körper (10) eine Schulter (15) aufweist, die radial in die zweite Kammer (14b) hineinragt, und wobei eine Seitenwand (26a) des Hauptzylinders (26) einen radial vorstehenden Abschnitt aufweist, der ausgebildet ist, an der Schulter (15) anzuliegen, wenn sich der Hauptzylinder (26) in einer Position nahe der Trennwand (20) befindet, so dass ein Kontakt zwischen der Trennwand und dem Hauptzylinder (26) vermieden wird.

3. Vorrichtung nach Anspruch 1 oder 2, wobei der Deckel (16) einen ersten Abschnitt aufweist, an dem der Hauptzylinder (26) anliegt, wenn sich der Zylinder in einer axial oberen Endstellung befindet, und einen zweiten Abschnitt, der in Bezug auf den ersten Abschnitt axial weiter in die zweite Kammer (14b) hineinragt, an dessen zweitem Abschnitt der Hilfskolben (32) anliegt, wenn sich der Kolben in einer axial oberen Endstellung befindet.

4. Vorrichtung nach einem der vorhergehenden Ansprüche, wobei der Primärzylinder (26) einen Boden (26b) aufweist, der der Trennwand (20) zugewandt ist und in dem sich mindestens ein Durchgangsloch (26c) befindet, das ausgebildet ist, die zweite Kammer (14b) und die dritte Kammer (27) in Fluidverbindung zu bringen.

5. Vorrichtung nach einem der vorhergehenden Ansprüche, wobei der Hauptzylinder (26) ein Entlastungselement (26d) aufweist, das radial in die dritte Kammer (27) hineinragt, wobei das Entlastungselement (26d) ausgebildet ist, einen Wegbegrenzer des Hilfskolbens (32) beim Gleiten des Kolbens innerhalb des Hauptzylinders (26) zu bilden.

6. Kraftfahrzeugstoßdämpfer, umfassend:
- eine Vorrichtung (9) zur Einstellung der Lage eines Kraftfahrzeugs und zur koordinierten Einstellung des Freiraums eines Puffers nach einem der vorhergehenden Ansprüche, die über die Sekundärstange (34) mit einer gefederten Masse des Kraftfahrzeugs verbindbar ist;
- ein zylindrisches Rohr (36), das ausgebildet ist, mit der ungefederten Masse des Kraftfahrzeugs verbunden zu werden, wobei in dem zylindrischen Rohr (36) ein Stoßdämpferkolben verschiebbar und ausgebildet ist, mit einem in dem zylindrischen Rohr (36) enthaltenen Fluid zusammenzuwirken, um die vertikale Schwingungsbewegung der gefederten Masse zu dämpfen, wobei der Puffer (22) ausgebildet ist, einen oberen Anschlag des vertikalen Hubs des zylindrischen Rohrs während der Kompressionsphase des Kraftfahrzeugstoßdämpfers zu bilden;
- einen Stoßdämpferschaft (38), der gleitend von dem zylindrischen Rohr (36) aufgenommen ist und gemeinsam mit dem Stoßdämpferkolben beweglich ist, wobei der Stoßdämpferschaft (38) ein Ende aufweist, das oben aus dem zylindrischen Rohr (36) herausragt, wobei das Ende einstückig mit dem Puffer (22) ausgebildet ist; und
- eine Feder (40) mit einem Ende, das in den ersten Flansch (12) des zylindrischen Körpers (10) eingreift, und dem gegenüberliegenden Ende, das in einen zweiten Flansch (37) eingreift, der radial von dem zylindrischen Rohr (36) vorsteht, wobei der zweite Flansch (37) gemeinsam mit dem zylindrischen Rohr (36) beweglich ist.

## Revendications

1. Dispositif (9) de réglage de l'attitude d'un véhicule à moteur et de réglage coordonné du jeu de butoir, le dispositif comprenant :
- un corps cylindrique (10), qui comporte une première bride (12) faisant saillie radialement, la bride (12) étant adaptée pour former une butée supérieure d'un ressort principal d'une suspension d'automobile, le corps cylindrique (10) définissant une première chambre (14a), axialement inférieure, et une deuxième chambre (14b), axialement supérieure, la deuxième chambre (14b) étant hermétiquement fermée au-dessus par un couvercle (16) et étant configurée pour être placée en connexion fluidique avec l'extérieur du corps cylindrique (10) au moyen d'un trou traversant (18) dans le corps cylindrique (10), les première et deuxième chambres (14a, 14b) étant découplées fluidiquement par un septum (20), interposé axialement entre les première et deuxième chambres (14a, 14b) ;
- un butoir (22), reçu de façon à pouvoir coulisser dans la première chambre (14a) du corps cylindrique (10) et adapté pour former un élément d'arrêt limite pour l'oscillation de la masse suspendue du véhicule lorsque cette dernière se rapproche de la masse non suspendue du véhicule ; **caractérisé en ce que** le dispositif comprend
- un actionneur primaire (24), comprenant :
- un cylindre primaire (26), reçu de façon à pouvoir coulisser dans la deuxième chambre (14b) du corps cylindrique (10), le cylindre primaire (26) étant mobile axialement en réponse à l'entrée ou au retrait de fluide dans/depuis la deuxième chambre (14b), et définissant à l'intérieur de celui-ci une troisième chambre (27), en connexion fluidique avec la deuxième chambre (14b) ; et
- une tige primaire (28), passant axialement à travers le septum (20) et connectée au niveau de ses extrémités opposées respectivement au cylindre primaire (26) et au butoir (22), la tige primaire (28) étant adaptée pour faire coulisser le butoir (22) dans la première chambre (14a) dans la même direction que le coulissement du cylindre primaire (26) dans la deuxième chambre (14b) ;
le dispositif (9) comprenant en outre un actionneur secondaire (30), qui comporte :
- un piston auxiliaire (32), reçu de façon à pouvoir coulisser dans la troisième chambre (27) du cylindre primaire (26), le piston auxiliaire (32) étant configuré pour se déplacer axialement par rapport au cylindre primaire (26) en réponse à l'entrée ou au retrait de fluide dans/depuis la troisième chambre (27) ; et
- une tige secondaire (34), passant axialement à travers le couvercle (16) et connectée au niveau d'une première extrémité au piston auxiliaire (32), l'extrémité opposée de la tige secondaire (34) étant adaptée pour être connectée à la masse suspendue du véhicule à moteur.

2. Dispositif selon la revendication 1, dans lequel le corps cylindrique (10) comprend un épaulement (15) faisant saillie radialement à l'intérieur de la seconde chambre (14b), et dans lequel une paroi latérale (26a) du cylindre primaire (26) comprend une partie faisant saillie radialement adaptée pour venir en butée contre l'épaulement (15) lorsque le cylindre primaire (26) se trouve dans une position proximale par rapport au septum (20), de telle sorte qu'un contact entre le septum et le cylindre primaire (26) est évité.

3. Dispositif selon la revendication 1 ou 2, dans lequel le couvercle (16) présente une première portion contre laquelle le cylindre primaire (26) vient en butée lorsque le cylindre se trouve dans une position de fin de course axialement supérieure, et une seconde portion, faisant davantage saillie axialement à l'intérieur de la deuxième chambre (14b) par rapport à la première portion, le piston auxiliaire (32) venant en butée contre cette seconde portion lorsque le piston se trouve dans une position de fin de course axialement supérieure.

4. Dispositif selon l'une quelconque des revendications précédentes, dans lequel le cylindre primaire (26) comprend une base (26b), qui fait face au septum (20) et dans laquelle se trouve au moins un trou traversant (26c), adapté pour connecter la deuxième chambre (14b) et la troisième chambre (27) selon une connexion fluidique.

5. Dispositif selon l'une quelconque des revendications précédentes, dans lequel le cylindre primaire (26) comprend un relief (26d), faisant saillie radialement à l'intérieur de la troisième chambre (27), le relief (26d) étant adapté pour former un élément d'arrêt limite du piston auxiliaire (32) lors du coulissement du piston à l'intérieur du cylindre primaire (26).

6. Amortisseur d'automobile, comprenant :
- un dispositif (9) de réglage de l'attitude d'un véhicule à moteur et de réglage coordonné du jeu de butoir, selon l'une quelconque des revendications précédentes, pouvant être connecté à une masse suspendue du véhicule à moteur au moyen de la tige secondaire (34) ;
- un tube cylindrique (36), adapté pour être connecté à la masse non suspendue du véhicule à moteur, tube cylindrique (36) dans lequel un piston d'amortisseur peut coulisser et est adapté pour interagir avec un fluide contenu à l'intérieur du tube cylindrique (36) pour amortir le mouvement oscillatoire vertical de la masse suspendue, le butoir (22) étant adapté pour former une butée supérieure de la course verticale du tube cylindrique lors de la phase de compression de l'amortisseur d'automobile ;
- une tige d'amortisseur (38), reçue de façon à pouvoir coulisser par le tube cylindrique (36) et mobile d'un seul tenant avec le piston d'amortisseur, la tige d'amortisseur (38) ayant une extrémité faisant saillie au-dessus du tube cylindrique (36), l'extrémité étant d'un seul tenant avec le butoir (22) ; et
- un ressort (40), ayant une extrémité qui s'engage avec la première bride (12) du corps cylindrique (10), et l'extrémité opposée qui s'engage avec une seconde bride (37) faisant saillie radialement depuis le tube cylindrique (36), la seconde bride (37) étant mobile d'un seul tenant avec le tube cylindrique (36).
